# EUROPEAN PATENT SPECIFICATION

(11) **EP 0 496 622 B1**
(45) Date of publication and mention of the grant of the patent: **14.05.1997**
(21) Application number: 92300590.4
(22) Date of filing: 23.01.1992
(51) Int. Cl.: H04M 1/72, H04Q 7/20

(54) **Cordless telephone system and a connecting method of a cordless telephone**
Schnurloses Telefonsystem und Verbindungsverfahren dazu
Système téléphonique sans fil et méthode de connexion d'un téléphone sans fil

(30) Priority: 24.01.1991 JP 25739/91
(43) Date of publication of application: 29.07.1992
(73) Proprietor: NEC CORPORATION, Tokyo (JP)
(72) Inventor: Saegusa, Noboru, c/o NEC Corporation, Minato-ku, Tokyo 108-01 (JP); Kohyama, Noyuki, c/o NEC Saitama Ltd., Kamikawamachi, Odama-gun, Saitama (JP)
(74) Representative: Harland, Linda Jane

(56) References cited:
- EP-A- 0 281 111
- PATENT ABSTRACTS OF JAPAN vol. 12, no. 320 (E-651) 30 August 1988 & JP-A-63 084 327
- PATENT ABSTRACTS OF JAPAN vol. 13, no. 254 (E-772) 13 June 1989 & JP-A-10 51 831
- PATENT ABSTRACTS OF JAPAN vol. 9, no. 81 (E-307) 10 April 1985 & JP-A-59 212 041

## Description

### BACKGROUND OF THE INVENTION

### 1. Field of the Invention

The present invention relates to a cordless telephone system of the type in which an operating zone can be switched over and a connecting method of a cordless telephone.

### 2. Description of the Related Art

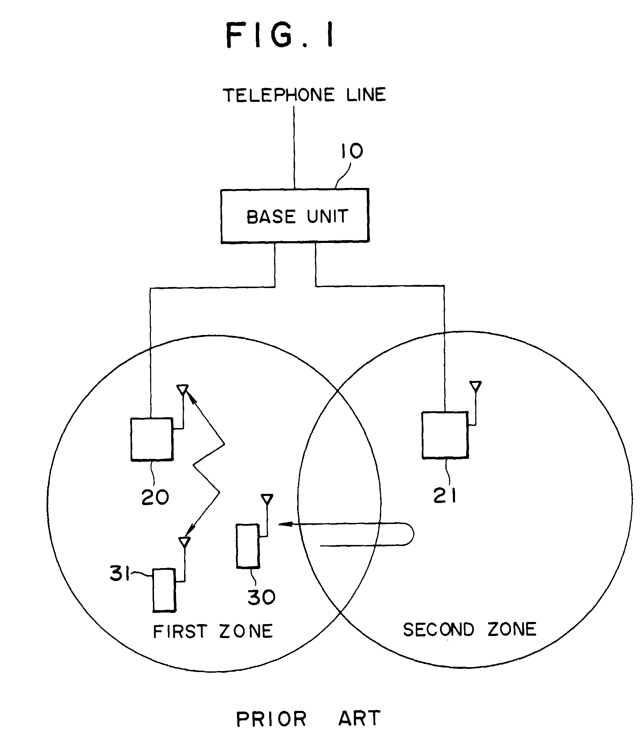

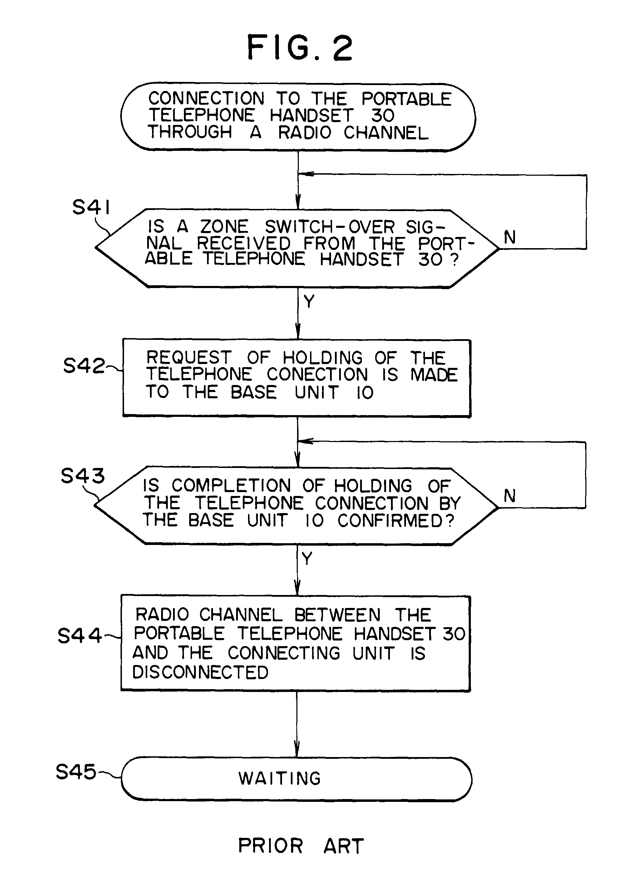

In recent years, cordless telephones (see EP-A-0 281 111) have been used widely. Fig. 1 schematically illustrates the structure of a conventional typical cordless telephone system. As can be seen in Fig. 1, the cordless telephone system includes a base unit 10 connected to the telephone line, a connecting unit 20 , connected to the base unit 10 in a first zone, and a portable telephone handset that can be connected to the connecting unit 20 through a radio channel in the first zone. The sequence of the operations of the connecting unit 20 in the first zone when the portable telephone handset moves into the second zone from the first zone will be described below with reference to Fig. 2. When the connecting unit 20 receives a zone switching-over signal from the portable telephone handset 30 connected thereto through the radio channel in the first zone (step S41), it requests temporary holding of the telephone connection to the base unit 10 (step S42). Next, the connecting unit 20 checks whether the base unit 10 has completed holding of the established telephone connection (step S43). If it is confirmed that holding of the telephone connection has been completed, the connecting unit 20 disconnects radio channel between the connecting unit 20 and the portable telephone handset 30 (step S44), and then enters a waiting state (step S45).

In the aforementioned conventional cordless telephone system, after the connecting unit 20 disconnects radio channel between the connecting unit 20 and the portable telephone handset 30 (step S44), it enters a waiting state (step S45) in which connection between the connecting unit 20 and another portable telephone handset 31 in the first zone can be made (see Fig.1). Therefore, when the portable telephone handset 30 returns to the first zone because it is not or cannot be connected to a connecting unit 21 in the second zone, it may not be connected even to the connecting unit 20 in the first zone. In that case, the telephone connection may be held by the base unit 10 for a long period of time when the worst comes to the worst. This makes the users of the telephone line confused.

### SUMMARY OF THE INVENTION

In view of the aforementioned problems of the conventional cordless telephone system, an object of the present invention is to provide a cordless telephone system which may assist in preventing an established telephone connection from being held over a long time.

To achieve this object, the present invention provides a cordless telephone system which comprises: a plurality of connecting units, each connecting unit including connection setting means for setting a radio channel between the connecting unit and a portable telephone handset in a zone to which the connecting unit belongs, and disconnection means for disconnecting the radio channel between the connecting unit and the portable telephone handset in response to a zone switch-over signal from the portable telephone handset; and a base unit connected to each of the connecting units through a telephone line. The connecting unit further includes re-connection reservation means for prohibiting the operation of the disconnection means relative to the portable telephone handset which has transmitted the zone switch-over signal for a predetermined period of time in response to the zone switch-over signal, and first connection reservation cancelling means for cancelling the prohibition by the re-connection reservation means when it is notified through the base unit that a radio channel has been established between the portable telephone handset which has transmitted the zone switch-over signal and the connection setting means of the connecting unit in another zone.

In a preferred form, the connecting unit further includes second connection reservation cancelling means for restarting the connection setting means relative to the portable telephone handset which has transmitted the zone switch-over signal when it receives a calling signal from the portable telephone handset which has transmitted the zone switch-over signal within the predetermined period of time.

When the portable telephone handset connected to the connecting unit through a radio channel in the first zone moves into a second zone, connection reservation is temporarily made between the portable telephone handset and the connecting unit connected to the portable telephone handset in the first zone. This connection reservation is cancelled when a radio channel has been established between the portable telephone handset and the connecting unit in the second zone. In consequence, holding of the telephone connection over a long time by the base unit can be prevented.

### BRIEF DESCRIPTION OF THE DRAWINGS

Fig. 1 is a schematic view illustrating the structure of a conventional cordless telephone system;
Fig. 2 is a flowchart showing the operation of the cordless telephone system shown in Fig. 1;
Fig. 3 is a schematic view illustrating the structure of an embodiment of a cordless telephone system according to the present invention;
Fig. 4 is a block diagram illustrating a connecting unit of the cordless telephone system of Fig. 3; and
Fig. 5 is a flowchart showing the operation of the cordless telephone system according to the present invention.

### DETAILED DESCRIPTION OF THE PREFERRED EMBODIMENT

An embodiment of the present invention will be described below with reference to the accompanying drawings.

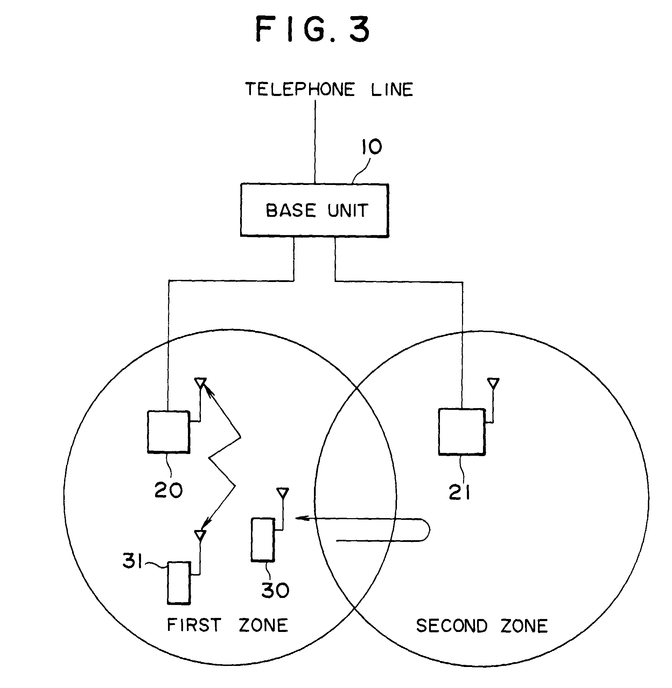

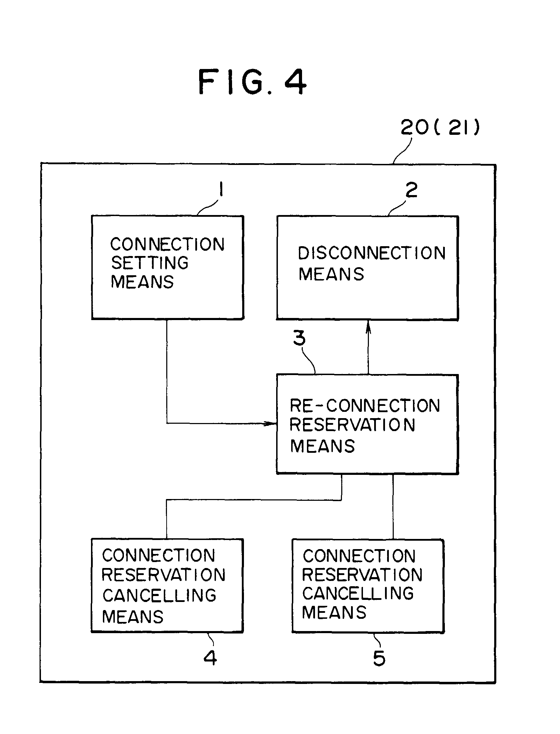

Referring to Figs. 3 and 4, a cordless telephone system includes connecting units 20 and 21 and a base unit 10 connected to the connecting units 20 and 21 through telephone lines. Each of the connecting units 20 and 21 includes connection setting means 1 for setting a radio channel between the connecting unit and a portable telephone handset 30 in a zone to which the connecting unit belongs, disconnection means 2 for disconnecting the radio channel between the connecting unit and the portable telephone handset 30 in response to a zone switch-over signal from the portable telephone handset 30, re-connection reservation means 3 for prohibiting the operation of the disconnection means 2 relative to the portable telephone handset 30 which has transmitted the zone switch-over signal for a predetermined period of time in response to the zone switch-over signal, first connection reservation cancelling means 4 for cancelling the prohibition by the re-connection reservation means 3 when it is notified through the base unit 10 that a radio channel has been established between the portable telephone handset 30 which has transmitted the zone switch-over signal and the connection setting means 1 of the connecting unit 21 in another zone, and second connection reservation cancelling means 5 for restarting the connection setting means 1 relative to the portable telephone handset 30 which has transmitted the zone switch-over signal when it receives a calling signal from the portable telephone handset 30 which has transmitted the zone switch-over signal within the predetermined period of time.

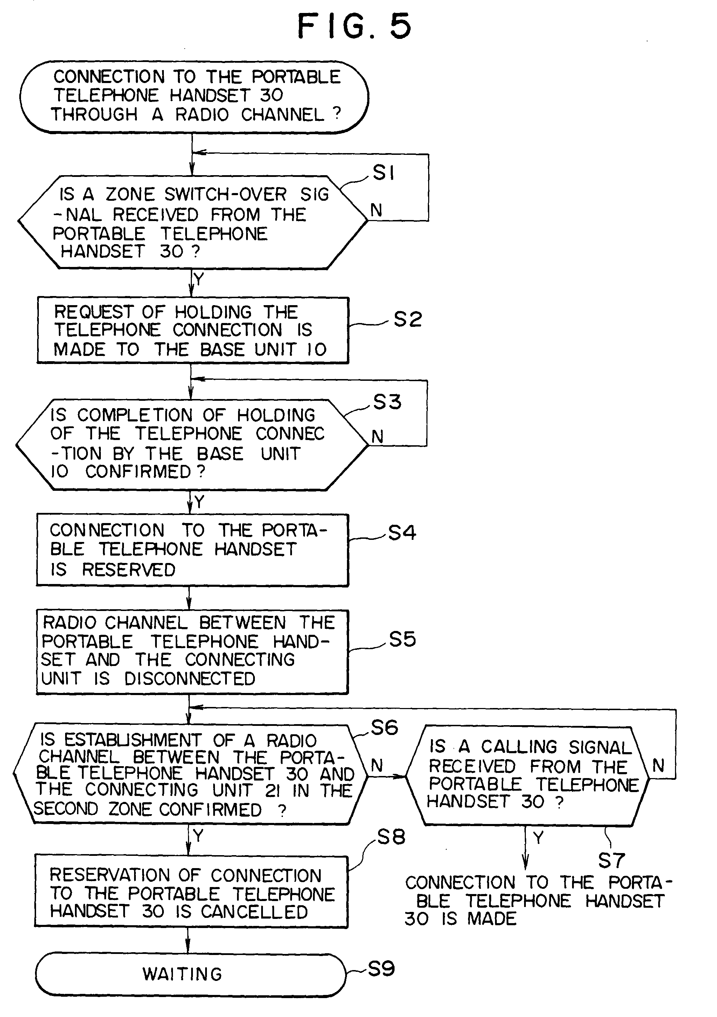

The operation of the aforementioned cordless telephone system will be described below with reference to Fig. 5. When the connecting unit 20 receives a zone switching-over signal from the portable telephone handset 30 connected thereto through the radio channel in the first zone (step S1), the connecting unit 20 requests temporary holding of the telephone connection to the base unit 10 (step S2). Next, the connecting unit 20 checks whether the base unit 10 has completed holding of the established telephone connection (step S3). If it is confirmed that holding of the telephone connection has been completed, the connecting unit 20 reserves re-connection to the portable telephone handset 30 (step S4), and then disconnects radio channel between the connecting unit 20 and the portable telephone handset 30 (step S5). If it is confirmed that a radio channel has been established between the portable telephone handset 30 and the connecting unit 21 in the second zone (step S6) before reservation of re-connection to the portable telephone handset 30 is cancelled, the connecting unit 20 cancels reservation of connection to the portable telephone handset 30 (step S8), and then enters a waiting state (step S9). If the connecting unit 20 receives a call signal from the portable telephone handset 30 before reservation of re-connection to the portable telephone handset is cancelled, it establishes a radio channel between the connecting unit 20 and the portable telephone handset 30 in the first zone. However, the connecting unit 20 does not establish a radio channel with a portable telephone handset other than the portable telephone handset 30 before reservation of connection is cancelled.

As will be understood from the foregoing description, in the present invention, when the portable telephone handset connected to the connecting unit through a radio channel in the first zone moves into a second zone, connection reservation is temporarily made between the portable telephone handset and the connecting unit connected thereto in the first zone. This connection reservation is cancelled when a radio channel has been established between the portable telephone handset and the connecting unit in the second zone. In consequence, disability of establishment of a radio channel between the portable telephone handset and the connecting unit in the first or second zone can be eliminated during switching over of the zone, and the possibility that the telephone connection is held for a long time during switching over of the zone can thus be avoided.

## Claims

1. A cordless telephone system comprising: a plurality of connecting units (20,21), each of said connecting units including connection setting means (1) for setting a radio channel between the connecting unit and a portable telephone handset (30) a zone connecting the connecting unit belongs, and disconnection means (2) for disconnecting the radio channel between the connecting unit and the portable telephone handset (30) in response to a zone switch-over signal from the portable telephone handset (30); and a base unit (10) connected to each of said connecting units (20,21) through a telephone line,
the system being characterized in that said connecting unit includes re-connection reservation means (3) for prohibiting the operation of said disconnection means relative to the portable telephone handset (30) which has transmitted the zone switch-over signal for a predetermined period of time in response to the zone switch-over signal, and first connection reservation cancelling means (4) for cancelling the prohibition by said re-connection reservation means (3) when it is notified through said base unit (10) that a radio channel has been established between the portable telephone handset (30) which has transmitted the zone switch-over signal and the connection setting means (1) of the connecting unit (21) in another zone.

2. A cordless telephone system according to claim 1, wherein said connecting unit includes second connection reservation cancelling means (5) for restarting said connection setting means (1) relative to the portable telephone handset (30) which has transmitted the zone switch-over signal when said second connection reservation cancelling means (5) receives a calling signal from the portable telephone handset (30) which has transmitted the zone switch-over signal within the predetermined period of time.

3. A connecting method of a cordless telephone
characterized in that:
(a) a connecting unit (20) in the first zone requests (51,52) temporary holding of telephone connection to a base unit (10) when the connecting unit (20) receives a zone switching-over signal from a portable telephone handset (30) which is in connection with the connecting unit (20) through a radio channel in the first zone;
(b) said connecting unit (20) disconnects (53-55) the radio channel with the portable telephone handset (30) after reservation of reconnection with the portable telephone handset (30) upon confirmation of completion of the holding of the telephone connection by the base unit (10); and
(c) said connecting unit (20) cancels (56-58) reservation of connection with the portable telephone handset (30) when the connecting unit (20) confirms that a radio channel has been established between the portable telephone handset (30) and a connecting unit (21) in the second zone during reservation of connection with the portable telephone handset (30) while the connecting unit (21) re-establishes a radio channel between the connecting unit (20) and the portable telephone handset (30) in the first zone when the connecting unit (21) receives a call signal from the portable telephone handset (30).

## Patentansprüche

1. Schnurloses Telefonsystem, das aufweist: mehrere Verbindungseinheiten (20,21), wobei jede der Verbindungseinheiten aufweist: eine Verbindungseinstelleinrichtung (1) zum Einstellen eines Funkkanals zwischen der Verbindungseinheit und einem tragbaren Handapparat (30) in einem Bereich, zu dem die Verbindungseinheit gehört, und eine Trenneinrichtung (2) zum Trennen des Funkkanals zwischen der Verbindungseinheit und dem tragbaren Handapparat (30) als Reaktion auf ein Bereichsumschaltsignal von dem tragbaren Handapparat (30); und eine Basiseinheit (10), die mit jeder der Verbindungseinheiten (20,21) durch eine Telefonleitung verbunden ist,
wobei das System dadurch gekennzeichnet ist, daß die Verbindungseinheit aufweist: eine Wiederverbindungsreservierungseinrichtung (3) zum Sperren des Betriebs der Trenneinrichtung bezüglich des tragbaren Handapparats (30), der das Bereichsumschaltsignal während einer vorherbestimmten Zeitspanne gesendet hat, als Reaktion auf das Bereichsumschaltsignal, und eine erste Verbindungsreservierungslöscheinrichtung (4) zum Löschen der Sperre durch die Wiederverbindungsreservierungseinrichtung (3), wenn durch die Basiseinheit (10) bestätigt wird, daß ein Funkkanal zwischen dem tragbaren Handapparat (30), der das Bereichsumschaltsignal gesendet hat, und der Verbindungseinstelleinrichtung (1) der Verbindungseinheit (21) in einem anderen Bereich aufgebaut worden ist.

2. Schnurloses Telefonsystem nach Anspruch 1, in dem die Verbindungseinheit eine zweite Verbindungsreservierungslöscheinrichtung (5) zum Wiedereinschalten der Verbindungseinstelleinrichtung (1) bezüglich des tragbaren Handapparats (30) aufweist, der das Bereichsumschaltsignal gesendet hat, wenn die zweite Verbindungsreservierungslöscheinrichtung (5) ein Anrufsignal von dem tragbaren Handapparat (30) empfängt, der das Bereichsumschaltsignal innerhalb der vorherbestimmten Zeitspanne gesendet hat.

3. Verbindungsverfahren eines schnurlosen Telefons, dadurch gekennzeichnet, daß:
(a) eine Verbindungseinheit (20) im ersten Bereich ein (S1,S2) zeitweiliges Halten der Telefonverbindung zu einer Basiseinheit (10) anfordert, wenn die Verbindungseinheit (20) ein Bereichsumschaltsignal von einem tragbaren Handapparat (30) empfängt, der mit der Verbindungseinheit (20) durch einen Funkkanal in dem ersten Bereich in Verbindung steht;
(b) die Verbindungseinheit (20) den Funkkanal mit dem tragbaren Handapparat (30) nach der Reservierung der Wiederverbindung mit dem tragbaren Handapparat (30) auf eine Bestätigung der Vollendung des Haltens der Telefonverbindung durch die Basiseinheit (10) hin trennt (S3-S5), und
(c) die Verbindungseinheit (20) die Reservierung der Verbindung mit dem tragbaren Handapparat (30) löscht (S6-S8), wenn die Verbindungseinheit (20) bestätigt, daß ein Funkkanal zwischen dem tragbaren Handapparat (30) und einer Verbindungseinheit (21) in dem zweiten Bereich während der Reservierung der Verbindung mit dem tragbaren Handapparat (30) aufgebaut worden ist, während die Verbindungseinheit (21) wieder einen Funkkanal zwischen der Verbindungseinheit (20) und dem tragbaren Handapparat (30) im ersten Bereich aufbaut, wenn die Verbindungseinheit (21) ein Anrufsignal von dem Handapparat (30) empfängt.

## Revendications

1. Système téléphonique sans fil comprenant : une pluralité d'unités de connexion (20, 21), chacune desdites unités de connexion comprenant des moyens de détermination de connexion (1) permettant de déterminer un canal radio entre l'unité de connexion et un combiné de téléphone portable (30) dans une zone à laquelle appartient l'unité de connexion, et des moyens de déconnexion (2) permettant de déconnecter le canal radio entre l'unité de connexion et le combiné de téléphone portable (30) en réponse à un signal de changement de zone en provenance du combiné de téléphone portable (30) ; et une unité de base (10) connectée à chacune desdites unités de connexion (20, 21) par l'intermédiaire d'une ligne téléphonique, le système étant caractérisé en ce que ladite unité de connexion comprend des moyens de réservation de reconnexion (3) afin d'interdire que lesdits moyens de déconnexion n'agissent sur le combiné de téléphone portable (30) qui a transmis le signal de changement de zone pendant un temps prédéterminé en réponse au signal de changement de zone, et des premiers moyens d'annulation de réservation de connexion (4) permettant d'annuler l'interdiction émise par lesdits moyens de réservation de reconnexion (3) lorsque ladite unité de base (10) indique qu'un canal radio a été établi entre le combiné de téléphone portable (30) qui a transmis le signal de changement de zone et les moyens de détermination de connexion (1) de l'unité de connexion (21) dans une autre zone.

2. Système téléphonique sans fil selon la revendication 1, dans lequel ladite unité de connexion comprend des seconds moyens d'annulation de réservation de connexion (5) permettant de relancer lesdits moyens de détermination de connexion (1) relatifs au combiné de téléphone portable (30) qui a transmis le signal de changement de zone lorsque lesdits seconds moyens d'annulation de réservation de connexion (5) reçoivent un signal d'appel du combiné de téléphone portable (30) qui a transmis le signal de changement de zone dans l'intervalle de temps prédéterminé.

3. Procédé de connexion d'un téléphone sans fil caractérisé en ce que :
(a) une unité de connexion (20) de la première zone demande (S1, S2) le maintien temporaire d'une connexion téléphonique à une unité de base (10) lorsque l'unité de connexion (20) reçoit un signal de changement de zone en provenance d'un combiné de téléphone portable (30) qui est en liaison avec l'unité de connexion (20) par l'intermédiaire d'un canal radio dans la première zone ;
(b) ladite unité de connexion (20) déconnecte (S3-S5) le canal radio du combiné de téléphone portable (30) après réservation de la reconnexion avec le combiné de téléphone portable (30) lors de la confirmation de la fin du maintien de la connexion téléphonique par l'unité de base (10) ; et
(c) ladite unité de connexion (20) annule (S6-S8) la réservation de connexion avec le combiné de téléphone portable (30) lorsque l'unité de connexion (20) confirme qu'un canal radio a été établi entre le combiné de téléphone portable (30) et une unité de connexion (21) dans la deuxième zone pendant la réservation de connexion avec le combiné de téléphone portable (30) tandis que l'unité de connexion (21) établit à nouveau un canal radio entre l'unité de connexion (20) et le combiné de téléphone portable (30) dans la première zone lorsque l'unité de connexion (21) reçoit un signal d'appel en provenance du combiné de téléphone portable (30).
